# EUROPÄISCHE PATENTSCHRIFT

(11) **EP 0 656 320 B1**
(45) Veröffentlichungstag und Bekanntmachung des Hinweises auf die Patenterteilung: **02.09.1998**
(21) Anmeldenummer: 94118622.3
(22) Anmeldetag: 26.11.1994
(51) Int. Cl.: C02F 1/26

(54) **Verfahren zur Entfernung organischer Lösungsmittel aus Abwässern**
Process for removal of organic solvents from waste water
Procédé d'extraction de solvants organiques à partir d'eaux usées

(30) Priorität: 02.12.1993 DE 4341014
(43) Veröffentlichungstag der Anmeldung: 07.06.1995
(73) Patentinhaber: Celanese GmbH, 60439 Frankfurt (DE)
(72) Erfinder: Bach, Hanswilhelm, Dr., D-46166 Duisburg (DE); Bahrmann, Helmut, Dr., D-46499 Hamminkeln (DE); Weber, Jürgen, Dr., D-46147 Oberhausen (DE)

(56) Entgegenhaltungen:
- FR-A- 2 243 158
- FR-A- 2 319 585
- US-A- 4 306 884
- PATENT ABSTRACTS OF JAPAN vol. 2 no. 22 (C-74) ,23.Februar 1980 & JP-A-54 160322 (NIPPON KAYAKU) 19.Dezember 1979, & DATABASE WPI Section Ch, Week 8005 Derwent Publications Ltd., London, GB; Class B05, AN 80-08375c

## Beschreibung

Die Erfindung betrifft ein Verfahren zur Reinigung von Abwässern, die bei der Herstellung oder Verwendung organischer Lösungsmittel enthaltender lösungsmittelhaltiger Lacke auftreten.

Lackfarben sind komplexe Gemische nichtflüchtiger und flüchtiger Bestandteile. Zu den nichtflünchtigen Komponenten gehören u.a. Farbstoffe und Pigmente, Filmbildner, Harze und Weichmacher. Flüchtige Komponenten sind die Lösungsmittel, die bei der Filmbildung aus dem Überzugsmittel, makromolekulare Stoffe oder Vorstufen makromolekularer Stoffe, verdampfen. Aufgabe der Lösungsmittel ist es, die festen oder zähflüssigen Bindemittelkomponenten zu lösen und die Viskosität des Lackes zu beeinflussen, so daß er die für den jeweiligen Anwendungszweck geeignete Konsistenz besitzt.

Neue Entwicklungen zielen darauf ab, lösungsmittelfreie und lösungsmittelarme Lacke herzustellen. Dennoch kann auch heute in zahlreichen Fällen noch nicht auf den Zusatz von Lösungsmitteln zu Lackzubereitungen verzichtet werden. Die Art der Lösungsmittel richtet sich nach der Zusammensetzung der Lacke. Zu den am meisten verwendeten zählen aliphatische Monoalkohole, insbesondere Alkohole mit 3 bis 5 Kohlenstoffatomen, z.B. Propanol oder Butanol und Ester niederer aliphatischer Monoalkohole mit niederen Monocarbonsäuren, z.B. Butylacetat.

In den Abwässern haben die Lösungsmittel eine Erhöhung des CSB-Wertes (die Abkürzung CSB steht für "chemischen Sauerstoffbedarf") zur Folge. Man versteht hierunter die als Sauerstoffäquivalent ausgedrückte Menge Kaliumdichromat, die von den oxidierbaren Inhaltsstoffen eines Liters Wassers verbraucht wird. Die Bestimmung des CSB-Wertes erfolgt nach einer normierten Arbeitsweise. Sie ist z.B. in Ullmanns Encyclopädie der technischen Chemie, 4. Auflage (19981), Bd. 6, Seiten 376 ff, beschrieben.

Ehe die Abwässer in konventionelle Reinigungsanlagen, in Flußläufe oder andere Vorfluter eingeleitet werden, muß ihr Gehalt an organischen Verunreinigungen deutlich gesenkt werden, um den strengen Anforderungen des Gesetzgebers hinsichtlich der maximalen Schadstoffkonzentrationen in Abwässern zu genügen.

Aus US-A-4 306 884 ist bekannt, Alkohole aus Alkohol/Wassergemischen mit einem Extraktionsmittel, das als Hauptbestandteil einen höheren aliphatischen Alkohol und als Nebenbestandteil einen aliphatischen Kohlenwasserstoff enthält, abzutrennen. Vorzugsweise werden aliphatische Alkohole mit 7 bis 10 Kohlenstoffatomen und aliphatische Kohlenwasserstoffe mit 6 bis 12 Kohlenstoffatomen verwendet.

Es bestand daher die Aufgabe ein Verfahren zu entwickeln, mit dessen Hilfe die Konzentration organischer Verunreinigungen in den Abwässern der Lackherstellung und der Lackverwendung herabgesetzt werden kann.

Erfindungsgemäß wird diese Aufgabe gelöst durch ein Verfahren zur Reinigung von Abwässern der Lackherstellung und der Lackverwendung. Es ist dadurch gekennzeichnet, daß man die Abwässer mit Monoalkoholen, die 8 bis 16 Kohlenstoffatome im Molekül enthalten, extrahiert.

Der neue Prozeß ist technisch einfach durchzuführen, läßt sich leicht unterschiedlichen Gegebenheiten anpassen und zeichnet sich durch hohe Wirtschaftlichkeit und Effektivität aus. Er ermöglicht, 90 und mehr Prozent der in den Abwässern enthaltenen organischen Verunreinigungen abzutrennen.

Als Extraktionsmittel werden erfindungsgemäß höhere Monoalkohole, das sind Alkohole mit 8 bis 16 Kohlenstoffatomen im Molekül eingesetzt. Sie können geradkettig oder verzweigt, gesättigt oder ungesättigt sein. Es ist nicht erforderlich, reine Alkohole zu verwenden. Geeignet sind auch Gemische aus isomeren Alkoholen oder aus Alkoholen unterschiedlicher Molekülgröße. Bewährt haben sich 2-Ethylhexanol, 3,5,5-Trimethylhexanol, Isooctylalkohol, Nonylalkohol, Decylalkohol und Isodecylalkohol und die Gemische der isomeren C₈-, C₉- und C₁₀-Alkohole, insbesondere 2-Ethylhexanol.

Die Extraktion der organischen Verunreinigungen aus den Abwässern nach dem erfindungsgemäßen Verfahren erfolgt in den für die Solventextraktion üblichen Vorrichtungen. Bewährt haben sich Extraktoren, die einstufig oder mehrstufig als Extraktionsbatterien aus mehreren hintereinander geschalteten Mischer-Scheider-Paaren ausgestaltet sind. Ebenso können Extraktionskolonnen mit ruhenden Einbauten, wie Füllkörperkolonnen oder mit bewegten Einbauten, wie Rührkolonnen, verwendet werden, wobei Extraktionsmittel und Trägerflüssigkeit im Gleichstrom oder bevorzugt im Gegenstrom geführt werden. Üblicherweise arbeitet man unter normalen Druck- und Temperaturbedingungen.

Das Extraktionsmittel läßt sich in einfacher Weise durch Destillation regenerieren und kann daher wiederholt eingesetzt werden.

Das neue Verfahren ermöglicht die Aufarbeitung von Abwässern der Lackherstellung und Lackverwendung, die Lösungsmittel der genannten Art enthalten, unabhängig von sonstigen Bestandteilen der Lacke.

Durch das nachfolgende Beispiel wird das neue Verfahren näher beschrieben, jedoch nicht auf die dargestellte Ausführungsform beschränkt.

### Beispiel

100 g einer Lösung von 0,58 g n-Butylactat, 0,70 g n-Butanol und 0,71 g n-Propanol in 98,01 g Wasser wird bei Raumtemperatur über einen Zeitraum von 5 min in einem 500 ml-Scheidetrichter intensiv mit 100 g 2-Ethylhexanol extrahiert. Nach Beendigung der Extraktion trennen sich wäßrige und organische Phase innerhalb 1 min.

Die organische Phase wird gaschromatographisch analysiert; sie enthält 0,556 g n-Butylacetat, 0,628 g n-Butanol und 0,494 g n-Propanol, d.h. aus der wäßrigen Lösung werden 95,9 % Butylacetat, 89,7 % n-Butanol und 69,6 % Propanol entfernt.

## Patentansprüche

1. Verfahren zur Reinigung von Abwässern aus der Herstellung und Verwendung lösungsmittelhaltiger Lacke, dadurch gekennzeichnet, daß man die Abwässer mit Monoalkoholen, die 8 bis 16 Kohlenstoffatome im Molekül enthalten, extrahiert.

2. Verfahren nach Anspruch 1, dadurch gekennzeichnet, daß man die Abwässr mit 2-Ethylhexanol extrahiert.

## Claims

1. A process for the purification of wastewaters from the production and use of solvent-containing paints, which comprises extracting the wastewaters with monoalcohols which contain 8 to 16 carbon atoms in the molecule.

2. The process as claimed in claim 1, wherein the wastewaters are extracted with 2-ethylhexanol.

## Revendications

1. Procédé d'épuration des eaux usées issues de la fabrication et de l'utilisation des peintures contenant des solvants, caractérisé en ce que l'on extrait les eaux usées avec des monoalcools qui contiennent 8 à 16 atomes de carbone dans la molécule.

2. Procédé selon la revendication 1 caractérisé en ce que l'an extrait les eaux usées avec du 2-éthylhexanol.
